# EUROPEAN PATENT APPLICATION

(11) **EP 2 077 496 A1**
(43) Date of publication of application: **08.07.2009**
(21) Application number: 08000067.2
(22) Date of filing: 03.01.2008
(51) Int. Cl.: G06F 9/44, G06Q 10/00, G06F 3/048, G06F 3/038

(54) **Multi-user collaboration system**

(71) Applicant: WunderWorks B.V., 3958 NE Amerongen (NL)
(72) Inventor: Nieuwenhoven, Mels, Harry, 3958 NE Amerongen (NL)
(74) Representative: Dohmen, Johannes Maria Gerardus

(57) **Abstract**

Multi-user collaboration system and method, comprising processing means arranged for processing and graphically representing a plurality of software applications on at least one display. The multi-user collaboration system further comprises means for providing a plurality of user control information streams, a plurality of input devices for providing user control information to a user control information stream, and means for providing a plurality of graphical computer control objects, displayable and moveable on said at least one display, and for providing position information of said graphical computer control object with respect to said at least one display. Means are provided for associating a user control information stream and a graphical computer control object, the associating means being arranged for controlling position of said graphical computer control object with respect to said at least one display based on user control information from said user control information stream, and means for concurrently controlling said plurality of software applications based on position information of said plurality of graphical computer control objects and user control information from said user control information stream associated with said graphical computer control object.

## Description

### TECHNICAL FIELD

The present invention relates in general to computer control and, more specifically, to a multi-user collaboration system, a method of multi-user collaboration, and control of computer applications in a multi-user collaboration system.

### BACKGROUND ART

In present day computing, software applications are generally executed in graphical operating systems incumbent on a computer system, such as, for example, Microsoft Windows^{™} from Microsoft Corporation, and MacOS™ from Apple or Linux. In these graphical operating systems the application can be graphically controlled from a display. The operation system supports graphical input devices such as a mouse, a trackball, a touch pad, touch screen, graphic tablet and the like, by which the position of a cursor on the display may be controlled. Using the input device, the cursor may be positioned over a marked area on the display, and by creating an event at the input device, for example a mouse click or keyboard alphanumerical input followed by an 'Enter'-key as control action, a user may let the application perform a certain operation. Such operations may include starting another software application, changing the state of the software application, entering user data as input to the software application, etc..

Although one or more user software applications may run concurrently in the same operating system environment, conventional operating systems for processing software applications are usually aimed at supporting input from a single user for controlling these software applications. It is also known that in the field of gaming systems, a plurality of graphical objects on a display may be controlled by a plurality of associated input devices, controlled by a respective group of users. Such gaming systems are usually designed to execute a single application, i.e. a single game.

Collaboration amongst multiple users concurrently using a plurality of software applications is not available in the above mentioned computer operation system environments or gaming computers as a single platform without extensive handling of user control input information from a large number of input devices. Usually, for multi user collaboration, each user needs to have his own computer terminal, communicating with a central computer via a network, which central computer executes collaboration software wherein each user has a personalized view on the collaboration environment created by the collaboration application.

It is therefore an object of the present invention to provide a computer control system for multi-user collaboration, capable of executing a plurality of software applications, which can be independently and concurrently controlled by a plurality of users.

### SUMMARY OF THE INVENTION

According to a first aspect, the invention provides a multi-user collaboration system, comprising processing means arranged for processing and graphically representing a plurality of software applications on at least one display, the multi-user collaboration system further comprising:
- means for providing a plurality of user control information streams,
- a plurality of input devices for providing user control information to a user control information stream,
- means for providing a plurality of graphical computer control objects, displayable and moveable on the at least one display, and for providing position information of the graphical computer control object with respect to the at least one display,
- means for associating a user control information stream and a graphical computer control object, the associating means being arranged for controlling position of the graphical computer control object with respect to the at least one display based on user control information from the user control information stream,
- means for concurrently controlling the plurality of software applications based on position information of the plurality of graphical computer control objects and user control information from the user control information stream associated with the graphical computer control object.

The invention allows operation of the system according to user control information streams, wherein user control information originating from input devices controlled by a single user is combined and associated with a graphical computer control object such as a cursor or any other type pointer. This allows the user control information related to a single user to be made available for control of each of the plurality of software applications based on the position of the associated graphical computer control object on the display.

The invention allows a plurality of input devices to be used by a single user behaving as a single user control information stream for a particular software application. For example, a mouse and a keyboard can be used simultaneously to control the software application indicated by the position of the graphical computer control object on the display. The user control information streams allow software application control for a plurality of users, each user independently operating a particular user control information stream, without individually handling and redirecting user control information to be used by the software applications from a plurality of input devices.

In this multi-user collaboration system, a plurality of users are thus able to collaborate by each of the users using an input device, connected to the collaboration system by which each user can control the graphical computer control objects, i.e. cursors. By moving a cursor over the screen, software applications with visible output on the display can be controlled by moving the cursor over the graphical representations of the software applications and providing control information. The software applications may appear on the display showing sensitive screen objects such as buttons, links or text boxes on which a user may create control information using his input device, e.g. by clicking with a mouse.

A multi-user collaboration system according to the invention may be used for example in education, where a teacher and a plurality of students simultaneously use the collaboration system during instruction or a test. The system may for example present a question and a multiple choice answer, whereby each student simultaneously or in turn selects his or her personal answer.

Another example is de multi-user collaboration system used in a meeting, where for example a group of users is collaborating in creating an information spread sheet, using a spread sheet application, whereby another person is making an meeting report in a word processing application, each using the same display, collaboratively, concurrently working in a variety of computer applications on a single operating system.

In an embodiment according to the invention the means for concurrently controlling the plurality of software applications comprise redirecting user control information from the user control information stream associated with the graphical computer control object to a software application indicated by the graphical computer control object.

A user control information stream is redirected to a software application indicated by the position of its associated computer control object. Events within the user control information stream provide software application control. Data within the user control information stream are provided to the software application.

In another embodiment according to the the invention the means for providing a plurality of control information streams are arranged for normalizing user control information from a plurality of types of input devices.

This allows different types of input devices to be used for a same function of controlling software applications and/or graphical computer control objects. A cursor position on a display may for example be controlled by keyboard up/down and left/right keys, but also by mouse movements, moving forward and backward and to the left and to the right. By detecting such events and translating them into normalised events, various types of input devices may be connected and used for similar control functions.

An embodiment according to the invention the means for providing a plurality of control information streams are arranged for processing normalized user control information from a plurality of input devices such that the user control information from each of the plurality of input devices is aggregated to user control information in a user control information stream.

This embodiment allows a plurality of input devices of different kind to be used by a single user behaving as a single user control information stream. For example, a mouse and a keyboard can be used simultaneously to control the position of a graphical computer control object on the display. Various input devices can be integrated in this way to control the same graphical computer object, i.e. the same computer application.

Another embodiment according to the invention, further comprising means for selectively assigning a user control information stream and associated graphical computer control object to a software application, for controlling the software application. This embodiment of the invention allows user control information to be confined to a single software application, whilst user control information from other users can be routed to other software applications.

Another embodiment according to the invention comprises a further processing means, communicatively connected to the processing means, and means for replicating the user control information of a user control information stream and position information of an associated graphical computer control object for controlling a software application to be processed by the further processing means. This embodiment allows user control to be shared by the the processing means and further processing means, thus achieving that the multi-user collaboration system supports input devices connected to various interconnected computers for controlling different software applications running simultaneously and independently on these various interconnected computers.

A further embodiment according to the invention comprises a further display controlled by the further processing means, the system further comprises means for replicating display output of the processing means to the further processing means, for displaying on the further display. With this embodiment it is possible to display application output on different displays, allowing a plurality of users simultaneously collaborating in a plurality of software applications using a plurality of displays.

In an embodiment according to the invention, wherein a user control information stream comprises a unique identification, it is possible to retain control properties relating to a user or software application, such as appearance of the associated graphical computer control object. This feature allows a user to identify and select an input device with its associated stream and associated graphical computer control object and combine it with additional properties. For example each time the user control information stream is used the appearance of the associated graphical computer control object can be the same, since the control properties and input device with its associated graphical computer control object are linked to the user.

An embodiment according to the invention, wherein the unique identification is provided by an input device associated with the user control information stream, allows a user to use an input device which, for example, may be recognizable by shape colour or print and collaborate with a recognizable graphical control object on the display.

In a further embodiment according to the invention, comprising an input port for connecting an input device to the multi-user collaboration system, the input port has a port identification, and the unique identification of the user control information stream is provided by the port identification. This embodiment allows an input device to be plugged in the input port having a recognizable physical position linked to its port identification such that for a user, properties of the associated graphical computer control object are linked to this specific input port.

A yet further embodiment according to the invention, comprising user identification means and user authorization means, arranged for authorizing a user identification for controlling at least one of the plurality of software applications, allows in the collaboration environment users to selectively control software applications and assume different roles with access to different functionalities within an application.

In a classroom application, for example, for instruction of pupils a teacher must be enabled to perform actions such as presenting a question on the display, which action may not be available for pupils, whereas the pupils must be enabled to answer the question.

In an embodiment according to the invention, the user authorization means are arranged for exclusively assigning a user control information stream and associated graphical computer control object to a user identification. In the above example, properties of the pupil's graphical computer control object, such as appearance and/or behavior, could be maintained in subsequent sessions so that it is recognizable for and distinguishable from other users. It may be desirable that a pupil can set and use his personalized user control information stream and associated graphical computer control object.

In a further embodiment according to the invention the user authorization means are arranged for assigning a graphical appearance to the associated graphical computer control object.

In a second aspect of the invention there is provided a method of multi-user collaboration in a multi-user collaboration system, comprising the steps of:
- processing and graphically representing a plurality of software applications on at least one display,
- providing a plurality of user control information streams,
- providing user control information in a user control information stream by at least one input device,
- providing a plurality of graphical computer control objects, displayable and moveable on the at least one display,
- providing position information of the graphical computer control object with respect to the at least one display,
- associating a user control information stream and a graphical computer control object,
- controlling position of the graphical computer control object with respect to the at least one display based on user control information from the user control information stream,
- concurrently controlling the plurality of software applications based on position information of the plurality of graphical computer control objects and user control information from the user control information stream associated with the graphical computer control object.

In an embodiment according to the invention the step for concurrently controlling the plurality of software applications comprises redirecting user control information from the user control information stream associated with the graphical computer control object to a software application indicated by the graphical computer control object.

Another embodiment according to the invention further comprises the step of normalizing user control information from a plurality of types of input devices.

In an embodiment according to the invention the step of providing user control information streams comprises aggregating normalised user control information from a plurality of input devices.

Another embodiment according to the invention further comprises the step of selectively assigning a user control information stream and associated graphical computer control object to a software application, for controlling the software application.

Another embodiment according to the invention further comprises the steps of replicating the user control information of a user control information stream and position information of an associated graphical computer control object for controlling a software application being processed on a further processing means, communicating the replicated user control information to a further processing means.

Another embodiment according to the invention further comprises the steps of replicating the graphical representations of the software applications processed by the processing means, communicating the replicated graphical representations to the further processing means, displaying the replicated graphical representations on a further display connected to the further processing means.

Another embodiment according to the invention further comprises the step of identifying a user control information stream by a unique identification.

Another embodiment according to the invention further comprises the step of providing the unique identification by an input device associated with the user control information stream.

Another embodiment according to the invention further comprises the steps of connecting an input device to the multi-user collaboration system via an input port, the input port having a port identification, providing the unique identification by the input port to the user control information stream.

Another embodiment according to the invention further comprises the steps of providing user identification, and authorizing a user identification for controlling at least one of the plurality of software applications.

Another embodiment according to the invention further comprises the step of exclusively assigning a user control information stream and associated graphical computer control object to a user identification.

Another embodiment according to the invention further comprises the step of assigning a graphical appearance to the associated graphical computer control object by the user authorization means.

The invention also provides in a third aspect of the invention, a computer readable data carrier or device comprising computer instructions which when loaded and executed into a computer perform the steps of the above described method according to the invention.

### BRIEF DESCRIPTION OF THE DRAWINGS

Figure 1 shows a block diagram according to an embodiment of a multi-user collaboration system of the invention.
Figure 2 shows a diagrammatic representation of a display according to an embodiment of a multi-user collaboration system of the invention.
Figure 3 shows a block diagram of a collaboration layer according to an embodiment of the invention.
Figure 4 shows a block diagram of a collaboration layer according to a further embodiment of the invention.
Figure 5 shows a block diagram of a collaboration layer according to a further embodiment of the invention.
Figure 6 shows a block diagram of a collaboration layer according to a further embodiment of the invention.
Figure 7 shows a block diagram of a collaboration layer according to a further embodiment of the invention.

### DETAILED DESCRIPTION

The invention will now be illustrated by way of exemplary embodiments and will be better understood if read with reference to the accompanying drawings.

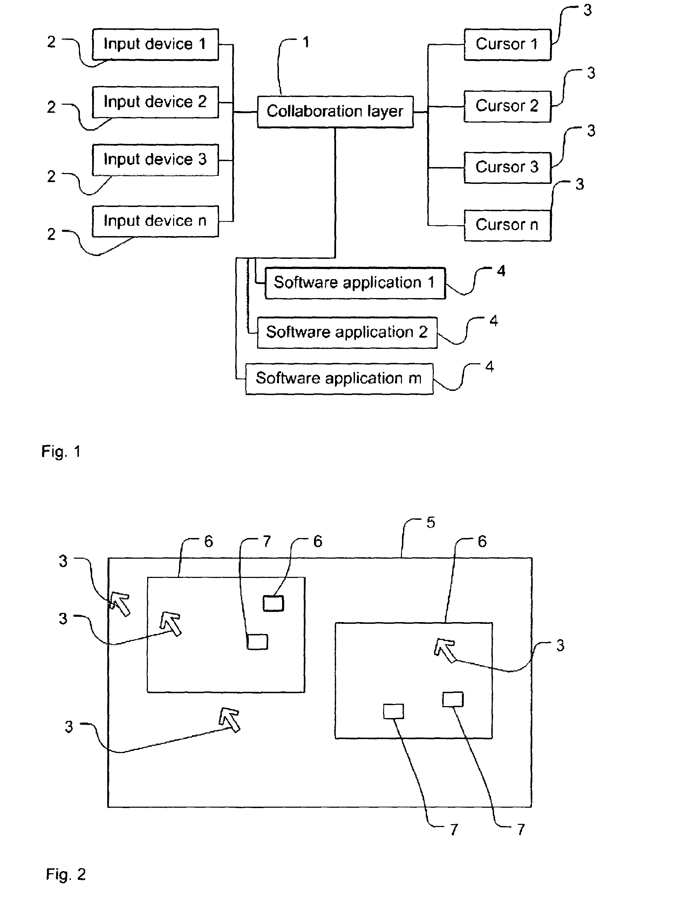

Figure 1 shows a block diagram according to an embodiment of a multi-user collaboration system of the invention. The multi-user collaboration system as depicted in figure 1 comprises a collaboration layer 1, which can be a middleware layer, embedded in an incumbent computer operating system like for example Microsoft Windows^{™} from Microsoft Corporation, MacOS™ from Apple or Linux, providing services between the operating system, software applications and I/O devices. The operating system and middleware layer can be executed on a computer such as a Personal Computer (PC) or any data processing system having a processor and a memory arranged for processing computer programs providing software applications.

The collaboration layer 1 communicates with input devices 2, software applications 4 and controls cursors 3. The input devices 2 may be computer mice, trackballs, and/or keyboards and the like. Cursors or pointers 3 are graphical computer control objects, generated by collaboration layer 1, displayable on display 5 not depicted in figure 1, having a position (X, Y and/or Z) with respect to display dimensions, allowing a user to graphically control computer software applications 4.

The collaboration layer 1 allows user control input from the input devices 2 to be directed to the computer software applications 4 depending on the position of a corresponding cursor 3. A cursor position is controllable by user control input from an input device 2. In an embodiment according to the invention the collaboration layer 1 checks in a configuration stage which input devices 2 are available in the system and creates a cursor for each input device 2 and links the cursor 3 with the input device 2 such that user control information relating to positioning information such as mouse movements from the input device 2 controls the position of the cursor 3 on display 5.

When a position of a cursor 3 corresponds with a displayed feature of a software application 4, user control information such as a mouse click, key stroke or any other event from the linked or associated input device is directed by the collaboration layer 1 to the software application 4. By switching or redirecting the user control information from one of a plurality input devices for each event to a software application 4, depending on an associated cursor position, the collaboration layer 1 allows for a plurality of software applications to be controlled concurrently by a plurality of users operating the input devices 2.

In an embodiment of the collaboration layer, the collaboration layer 1 may be arranged to push the user control information to a software application 4, or the user control information can be pushed into a buffer, which buffer can be consulted by a software application.

In another embodiment, a software application 4 may be arranged to pull or collect the user control information from the collaboration layer 1. The push and pull action may both be implemented in the collaboration layer 1.

Collaboration layer 1 may control software applications 4 concurrently executing within the incumbent operating system.

The software applications 4 can be generic 'off-the-shelf' third party software applications adapted for use by a single user, which can get input data, streams, events and control form the collaboration layer, or software applications adapted for simultaneous use by a plurality of users. Multi-user software applications can be active concurrently. Dedicated multi-user software applications can directly make use of and be controlled by multiple input devices 2, cursors 3 simultaneously.

Figure 2 shows a diagrammatic representation of a display 5 according to an embodiment of a multi-user collaboration system of the invention. Display 5 is shown displaying multiple cursors 3 controlled by the collaboration layer 1 and multiple representations 6 of software applications 4, the software applications under the control of the incumbent operating system. Such a representation 6 may be in the form of a "window" showing images related to and controlled by the software applications 4.

Current operating systems like Microsoft Windows, Linux, MacOS can generate a view of currently executing software applications resembling a desktop. The displayed images may show "sensitive areas" 7, where if a cursors coincides with such sensitive area, the collaboration layer 1 may redirect user control information from an associated input device 2 to the software application 4 generating the sensitive area.

Display 5 can be a computer screen (CRT, LCD and the like) but any display device including a projector for projecting computer images on a wall or screen may be suitable, such as (multi-) monitors, beamers, display walls and screens, especially adapted and suitable for multi-user collaboration in a room with a plurality of users.

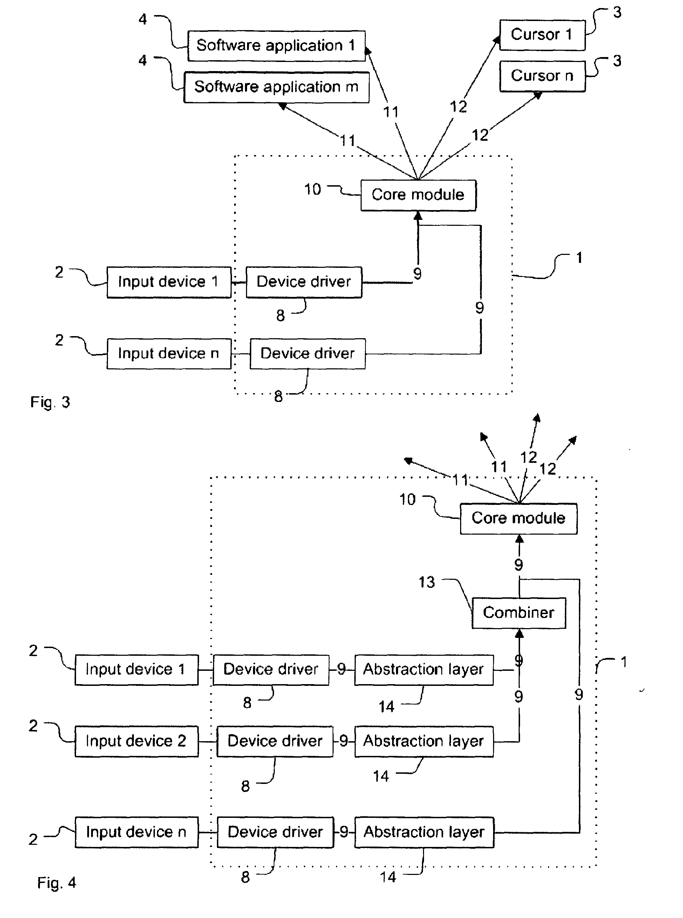

Figure 3 shows a block diagram of a collaboration layer according to an embodiment of the invention. Collaboration layer 1 is subdivided in device driver modules 8 and a core module 10.

Each input device is controlled by a device driver 8, responsible for handling input events. Device drivers 8 may be supplied by input device manufacturers. The device drivers 8 produce user control information in a user control information stream 9, which may be any data structure providing information to an operating system or software application. Each stream 9 is uniquely identifiable, hierarchically manageable and routable, by which each input device 2 is linked with a cursor 3 via core module 10. An identification can be provided by an input device 2 which may have a unique identification programmed therein, which can be read by device driver 8 and supplied to core module 10 who manages all available input devices 2 and associated user control information streams 9. If an identification cannot be provided by an input device, it may be obtained by reading an identification, i.e. physical address, of a port to which the input device 2 is connected.

Core module 10 reads user control information from the control information stream 9 and redirects and makes this available to the software applications 4 via application control flow 11 and cursors 3 via cursor control flow 12 as described above.

Core module 10 may be programmed such that all user control information of at least one input device is enabled for at least particular software application. This has the effect for a user that the at least one software application for which the input device is enabled can be controlled by the associated graphical computer control object or cursor 3. In an embodiment according to the invention, a database of software applications is maintained and consulted by the core module 10 wherein the assigning of an input device with a software application is stored.

Application control flow 11 comprises the part of the processed input data, which is routed to and from software applications 4 in order to control these applications and to receive actions and results back from these applications. Application control flow 11 comprises for example: specific (or all) input data (stream, events, control) from input device1 can be routed to application1, from input device2 to application2, input device N to application(s) N.

Cursor control flow 12 denotes the part of the processed input data which controls the graphical control objects 3 associated with these input devices 2, in conjunction with user- and application specific settings. Cursor control flow 12 comprises for example: specific ( or all) input data (e.g. cursor position) from input device1 routed to application1, specific ( or all) input data (e.g. cursor position) from input device2 to application2, input device N to application(s) N.

User control information streams 9 can be implemented by a replication mechanism wherein modules like core module 10, device driver 8 etc., providing and using data use a common data structure also known as "data container". By means of mutually signalling an information using module replicates information from the data container when the information providing module has signalled that certain information has changed.

Alternatively, information flows 9, 11, 12 can be implemented as buffers wherein information can be written by an information providing module and from which information is read by an information using module.

Figure 4 shows a block diagram of a collaboration layer according to a further embodiment of the invention providing aggregated user control input.

In an embodiment of the invention a device driver 8 is enhanced by an abstraction layer 14. The abstraction layer 14 provides mapping of like events from input devices 2 to same abstract events in the user control information streams 9. A left mouse click and an "Enter" keystroke may for example be mapped in the abstraction layer to a same normalised event for generating user control information, with a common connotation. Left and/or right movement of a mouse and left and/or right keystrokes may be mapped to respectively left and/or right movement instructions for a cursor 3. The abstraction layer outputs its abstract events as user control information in a user control information stream 9.

In a further embodiment of the invention, the abstraction layer may detect a sequence of events. This sequence of events may be mapped into a single event with a special connotation. For example a sequence describing a circular movement of an input device 2 may be detected. The abstraction layer now produces a single event denoting the circular movement, thereby making communication in user control information stream 9 more efficient and generic.

Combiner 13 is a module arranged for combining a plurality of user control information streams 9 from associated input devices 2. For example user control information is combined from a mouse and a keyboard, whereby sensed mouse left, right, up and down movement data are combined with respective left, right, up and down keystroke data from the keyboard and mouse click data are combined with keystroke data such as "Enter" from the keyboard. Likewise other input devices 2 can be combined. A user can operate a mouse, a drawing tablet and a keyboard and a pointing device as a single device within a software application or as a single device in a first application and (concurrently) as another device in other software application(s).

Combining action of the combiner module 13 can be performed after operation of the above described abstracting layer. The combiner 11 is then programmed to concatenate abstracted user control information from selected user control input streams 9, to be written in another user control information input stream 9. Combiner 13 now acts as a virtual input device.

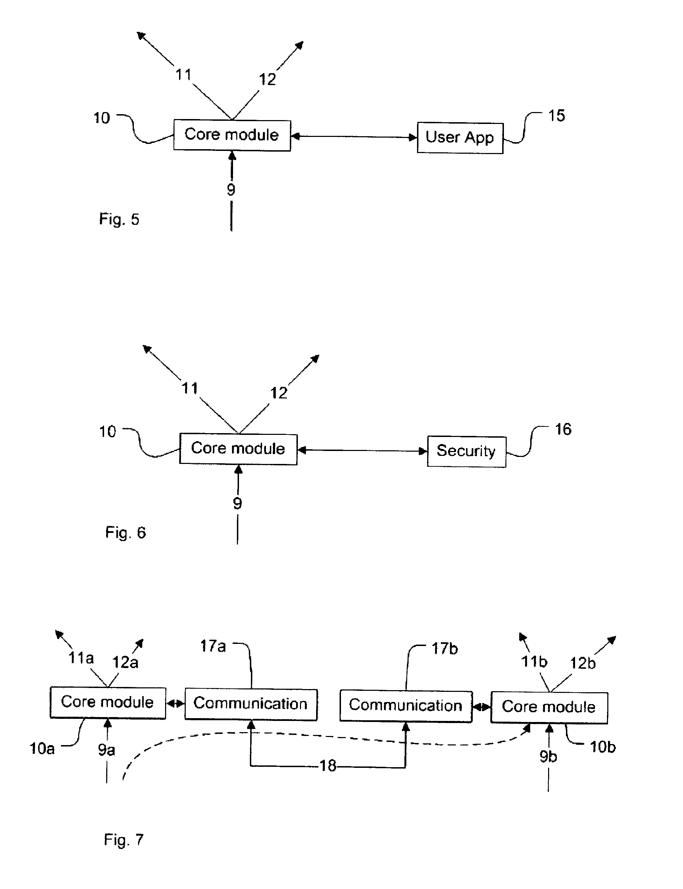

Figure 5 shows a block diagram of a collaboration layer 1 according to a further embodiment of the invention providing a UserApp module 15. UserApp module 15 takes care of making available the user- and application specific settings, routed streams, control and events to all applications - local or remote connected.

The UserApp module 15 can hold user specific settings (high score, results from last time, (combination of) the users input devices, the users control over which applications (hierarchy) etc. The UserApp module 15 can group user settings on a user basis, so a logged in user can be assigned to a particular group and so to particular group settings.

The UserApp module 15 can hold a user setting linking an information stream 9 with associated cursor control flow 12 to a user identity. A further setting may link the appearance of associated cursor 3, provided by core module 10, to a user identity. This way "Avatars" can be created, enabling collaborating users to be identified by their "Avatar" on the display 5. In an initialisation stage a user may for example select his or her "Avatar" from a pre-stored library. In order to facilitate this, the Userapp module 15 uses the user control input stream identity to link with a user identity. In a further embodiment a user control input stream and its associated curor 3 may be exclusively linked to a user, for example assigned in a configuration stage and protected by a password. This way each time a user logges on to the collaboration system he obtains his cursor 3 on display 5 and he is exclusively allowed to use the associated input device 2.

A software application can create an input device 2 an associated user control information stream 9 and an associated cursor 3. The UserApp module 15 can hold a setting linking the input device 2, its associated user control information stream 9 and its associated cursor 3 to the software application that created them. Thus can an input device 2, its associated user control information stream 9 and its associated cursor 3 to an application be created exclusively for this software application or a group of software applications. This can for example be useful in software applications wherein appearance and/or behaviour of an input device 2 and its associated cursor 3 are specific to the software application. Each time the software application that created the input device 2, its associated user control information stream 9 and its associated cursor 3 can retrieve the input device 2, its associated user control information stream 9 and its associated cursor 3 by the identity of the associated user control information stream 9.

Figure 6 shows a block diagram of a collaboration layer according to a further embodiment of the invention providing a Security module 16. Security module 16 controls which user input data, streams, events, control and UserApp data are available in which applications. It also takes care of the licensing of the system and it's modules and add-ons.

As an example: a computer with this multi user collaboration system has ten input devices connected. The security module 16 takes care that for example mouses nr 1 to 5 can operate in application1, mouse nr 6 can operate in software applications 1 and 2, keyboard nr 7 and nr 8 can each operate in any software applications, etcetera. Security module 16 may also control how many devices, how many concurrent applications and how many local or remote connected systems can be active at one time enforced by licensing models.

For this purpose a first database is maintained with authorisations based on a license with respect to a number of users, a number of software applications and/or a number of input devices.

Figure 7 shows a block diagram of a collaboration layer according to a further embodiment of the invention providing communication means 17a, 17b, 18 between a first core module 10a (local or remote) and another core module 10b (local or remote). In this model each core module 10a, 10b is client and server at the same time. All core modules 10a, 10b connected will all act as instances of each other, and therefore deliver an expandable structure of subsystems, wherein each subsytem can have input devices, run software application(s), display software application representations 6. User control information streams 9 carrying user control information such as events and control can be routed throughout the complete structure (network) of connected multi user collaboration subsystems.

As an example: a corporate setting with several meeting rooms, showrooms etc., each of which holding computers with input devices, are interconnected such that - on the basis of settings in the UserApp module 15 and Security module 16 - at any moment any of the input devices 2, no matter where the location, can be present in (one of the) displays at any locations. This can be at one venue (building) or via the Internet at remote venues.

In order to facilitate the above cooperation of multi-user collaboration systems, each core module 10a and 10b is provided with a database of user control information from user control input streams 9a and 9b respectively. Via communication modules 17a and 17b and communication link 18 the respective databases are replicated respectively, such that each respective core module 10a, 10b now has access to user control information from its corresponding subsystem. In figure 7, core module 10b has for example access to user control information from user control information input stream 9a, shown by the dashed line, and 9b. A person skilled in the art will understand that likewise core module 10a now has access to user control information from user control information input stream 9a and 9b, and that the multi user collaboration system of figure 7 can be extended to any number of subsystems, i.e. core modules 10.

Communication link can be any link suitable for interconnecting computer systems, wired connections based on Ethernet and TCP/IP protocols and the like wireless connections such as WLAN, WIMAX, Bluetooth and the like.

In a further embodiment of the invention, not shown in figure 7, desktop information from the incumbent operating system, showing representations 6 of running software applications 4, and cursor control flows 12a can be communicated by communication module 17a to communication module 17b such that core module 10b has access to cursor control flow 12a and vice versa. Thus facilitating display replication between collaboration subsystems allowing a plurality of users to collaborate on a plurality of different locations, each locations displaying the same software application representations 6 and cursors 3.

Core module 10, device driver 8, abstraction layer 14, combiner 13, UserApp module 15 and security module 16 can be programmed as computer programs executable in a computer, computer network or other programmable apparatus. In a computer with Microsoft Windows operating system the modules may be programmed as Dynamic Link Libraries (DLLs) which may be stored on a harddisk, floppy disk, optical disk or the like, which disk may be read by the computer, loaded into a memory and processed by a processor. The modules may also be stored on solid state memories such as Flash memories and subsequently loaded into a computer memory and executed by a processor. It is to be understood that a person skilled in the art may readily find other alternatives for storing the above described modules to be loaded and executed in a computer.

In the above description, embodiments of the inventions are illustrated by way of example only. A person skilled in the art may find variations and modifications to these embodiments without departing from the scope of the invention as determined by the appended claims.

## Claims

1. Multi-user collaboration system, comprising processing means arranged for processing and graphically representing a plurality of software applications on at least one display, said multi-user collaboration system further comprising:
- means for providing a plurality of user control information streams,
- a plurality of input devices for providing user control information to a user control information stream,
- means for providing a plurality of graphical computer control objects, displayable and moveable on said at least one display, and for providing position information of said graphical computer control object with respect to said at least one display,
- means for associating a user control information stream and a graphical computer control object, the associating means being arranged for controlling position of said graphical computer control object with respect to said at least one display based on user control information from said user control information stream,
- means for concurrently controlling said plurality of software applications based on position information of said plurality of graphical computer control objects and user control information from said user control information stream associated with said graphical computer control object.

2. Multi-user collaboration system according to claim 1, wherein said means for concurrently controlling said plurality of software applications comprise redirecting user control information from said user control information stream associated with said graphical computer control object to a software application indicated by said graphical computer control object.

3. Multi-user collaboration system according claim 1 or 2, wherein said means for providing a plurality of user control information streams are arranged for normalizing user control information from a plurality of different types of input devices.

4. Multi-user collaboration system according to claim 3, wherein said means for providing a plurality of user control information streams are arranged for processing normalized user control information from a plurality of input devices such that the user control information from each of the plurality of input devices is aggregated to user control information in a user control information stream.

5. Multi-user collaboration system according to any of the claims 1 - 4, further comprising means for selectively assigning a user control information stream and associated graphical computer control object to a software application, for controlling said software application.

6. Multi-user collaboration system according to any of the claims 1 - 5, further comprising a further processing means, communicatively connected to the processing means, and means for replicating said user control information of a user control information stream and position information of an associated graphical computer control object for controlling a software application to be processed on said further processing means.

7. Multi-user collaboration system according to claim 6, further comprising
- means for replicating said graphical representations of the software applications processed by the processing means,
- means for communicating said replicated graphical representations to said further processing means,
- said further processing means being arranged for displaying said replicated graphical representations on a further display connected to and controlled by said further processing means.

8. Multi-user collaboration system according to any of the claims 1 - 7, wherein a user control information stream comprises a unique identification.

9. Multi-user collaboration system according to claim 8, wherein said unique identification is provided by an input device associated with said user control information stream.

10. Multi-user collaboration system according to claim 8, further comprising at least one input port for connecting at least one input device, said at least one input port having a port identification, wherein said unique identification is provided by said port identification.

11. Multi-user collaboration system according to any of the claims 1 - 10, further comprising user identification means and user authorization means, arranged for authorizing a user identification for controlling at least one of said plurality of software applications.

12. Multi-user collaboration system according to claim 11, wherein said user authorization means are arranged for exclusively assigning a user control information stream and associated graphical computer control object to a user identfication.

13. Multi-user collaboration system according to claim 12, wherein said user authorization means are arranged for assigning a graphical appearance to said associated graphical computer control object.

14. Method of multi-user collaboration in a multi-user collaboration system, comprising the steps of:
- processing and graphically representing a plurality of software applications on at least one display,
- providing a plurality of user control information streams,
- providing user control information in a user control information stream by at least one input device,
- providing a plurality of graphical computer control objects, displayable and moveable on said at least one display,
- providing position information of said graphical computer control object with respect to said at least one display,
- associating a user control information stream and a graphical computer control object,
- controlling position of said graphical computer control object with respect to said at least one display based on user control information from said user control information stream,
- concurrently controlling said plurality of software applications based on position information of said plurality of graphical computer control objects and user control information from said user control information stream associated with said graphical computer control object.

15. Method according to claim 14, wherein said step for concurrently controlling said plurality of software applications comprises redirecting user control information from said user control information stream associated with said graphical computer control object to a software application indicated by said graphical computer control object.

16. Method of multi-user collaboration according to any of the claims 14
- 15, further comprising normalizing user control information from a plurality of types of input devices.

17. Method of multi-user collaboration according to claim 16, wherein said step of providing user control information streams comprises aggregating normalized user control information from a plurality of input devices.

18. Method of multi-user collaboration according to any of the claims 14
- 17, further comprising selectively assigning a user control information stream and associated graphical computer control object to a software application, for controlling said software application.

19. Method of multi-user collaboration according to any of the claims 14
- 18, further comprising
- replicating said user control information of a user control information stream and position information of an associated graphical computer control object for controlling a software application being processed on a further processing means,
- communicating said replicated user control information to a further processing means.

20. Method of multi-user collaboration according to claim 19, further comprising
- replicating said graphical representations of the software applications processed by the processing means,
- communicating said replicated graphical representations to said further processing means,
- displaying said replicated graphical representations on a further display connected to said further processing means.

21. Method of multi-user collaboration according to any of the claims 14 - 20, further comprising the step of identifying a user control information stream by a unique identification.

22. Method of multi-user collaboration according to claim 21, further comprising the step of providing said unique identification by an input device associated with said user control information stream.

23. Method of multi-user collaboration according to claim 21, further comprising:
- connecting an input device to the multi-user collaboration system via an input port, said input port having a port identification,
- providing said unique identification by said input port to said user control information stream.

24. Method of multi-user collaboration according to any of the claims 14 - 21, further comprising the steps of providing user identification, and authorizing a user identification for controlling at least one of said plurality of software applications.

25. Method of multi-user collaboration according to claim 24, further comprising the step of exclusively assigning a user control information stream and associated graphical computer control object to a user identification.

26. Method of multi-user collaboration according to claim 25, further comprising the step of assigning a graphical appearance to said associated graphical computer control object by said user authorization means.

27. Computer readable data carrier, comprising computer instructions which when loaded and executed into a computer perform the steps of the method according to any of the claims 14 - 26.
